Europäisches Patentamt

European Patent Office

Office européen des brevets

(19)

(11) Veröffentlichungsnummer : **0 145 869**
B1

(12) EUROPÄISCHE PATENTSCHRIFT

(45) Veröffentlichungstag der Patentschrift :
12.11.86

(51) Int. Cl.⁴ : **F 16 C 11/06**

(21) Anmeldenummer : **84111874.8**

(22) Anmeldetag : **04.10.84**

(54) Kugelgelenk.

(30) Priorität : **15.11.83 DE 3341255**

(43) Veröffentlichungstag der Anmeldung :
**26.06.85 Patentblatt 85/26**

(45) Bekanntmachung des Hinweises auf die Patenterteilung : **12.11.86 Patentblatt 86/46**

(84) Benannte Vertragsstaaten :
**AT BE DE FR GB IT NL SE**

(56) Entgegenhaltungen :
**DE-A- 2 157 355**
**FR-A- 2 238 859**
**US-A- 3 539 234**
**US-A- 4 105 261**

(73) Patentinhaber : **TRW Ehrenreich GmbH & Co. KG**
**Hansa-Allee 190**
**D-4000 Düsseldorf 11 (DE)**

(72) Erfinder : **Ito, Eiichi**
**Am Eisenbrand 20**
**D-4005 Meerbusch 1 (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

## Beschreibung

Gegenstand der Erfindung ist ein Kugelgelenk mit einem in einer Lagerschale aus elastischem Material gehaltenen Kugelkopf, wobei die auf den Kugelkopf einen Radialdruck ausübende Lagerschale in ein im wesentlichen topfartig ausgebildetes Gelenkgehäuse eingesetzt ist und auf ihrer Außenfläche mit an der Innenwand des Gelenkgehäuses anliegenden, elastisch verformbaren Erhebungen versehen ist.

Aus der DE-C-19 53 116 ist ein Kugelgelenk mit einer einteiligen Gelenkschale bekannt, die an einer Stirnfläche im Abstand voneinander winzige warzen- oder nockenartige Erhebungen von die Fertigungstoleranzen des Gelenkes geringfügig übersteigender Höhe aufweist, welche durch den die Stirnfläche gegen eine Schulterfläche des Gelenkgehäuses pressenden Einspanndruck verformbar sind. Diese bekannten Erhebungen haben die Aufgabe, Fertigungstoleranzen der Gelenkpartner auszugleichen, um unterschiedliche Gängigkeiten der Kugelgelenke zu vermeiden.

Aus der DE-A-20 34 667 ist ein elastisches Kugelgelenk mit einer zweiteilig ausgebildeten Lagerschale bekannt, wobei eine Lagerschalenhälfte mit Ausnehmungen versehen ist, um eine Veränderung der Elastizität zu bewirken. Diese bekannten Ausnehmungen haben bei einer Verwendung des Kugelgelenkes als Spurstangengelenk die Aufgabe, bei Kurvenfahrt auftretende Seitenkräfte, die am kurveninneren Rad kleiner als am kurvenäußeren Rad sind, zu kompensieren.

Davon ausgehend liegt der Erfindung die Aufgabe zugrunde, die zum Ausgleich von Fertigungstoleranzen und zur Veränderung der Elastizität bereits bekannten Erhebungen bzw. Ausnehmungen so anzuordnen und auszubilden, daß beim bestimmungsgemäßen Gebrauch im Fahrbetrieb auftretende Stoßbelastungen aufgefangen werden können, ohne die Erhebungen plastisch zu verformen und ihre Elastizität zu beseitigen.

Zur technischen Lösung dieser Aufgabe wird vorgeschlagen, die Erhebungen an dem Mantel der Lagerschale als sich in axialer Richtung erstreckende Rippen anzuordnen, zwischen denen auf dem Mantelumfang parallel verlaufend und von diesen durch axial verlaufende, nutenförmige Ausnehmungen getrennte Stege angeordnet sind, deren in Umfangsrichtung gemessene Stegbreite größer als die Breite der Rippen ist, während die radiale Erstreckung der Rippen größer als die der Stege ist, so daß die Lagerschale nur bei großer auf das Gelenk einwirkender Belastung auch über die Stege an dem Gelenkgehäuse abgestützt wird.

Bei einem nach dieser technischen Lehre ausgebildeten Kugelgelenk können die längeren Rippen mit kleiner Grundfläche in bekannter Weise dazu ausgenutzt werden, Fertigungstoleranzen des Gelenkgehäuses bei der Montage auszugleichen. Die daneben vorgesehenen, kürzeren Stege mit größerer Grundfläche sollen erst im Fahrbetrieb bei Stoßbelastungen zum Tragen kommen, welche die längeren Rippen plastisch verformen und damit den Federungseffekt der aus einem Elastomer hergestellten Lagerschale beseitigen würden.

Der Erfindungsgedanke besteht also darin, stufenförmig angeordnete Rippen und Stege unterschiedlicher Grundfläche zu verwenden, wobei die höher liegende Stufe (Rippe) mit kleiner Grundfläche in erster Linie zum Ausgleich der Fertigungstoleranzen und die etwas niedriger liegende Stufe (Steg) mit größerer Grundfläche zum Auffangen von Stoßbelastungen im Fahrbetrieb dient, damit die Federungseigenschaft der Lagerschale erhalten bleibt. Dabei dienen die von den Ausnehmungen zwischen den Rippen und Stegen gebildeten Hohlräume dazu, ein Ausweichen des Materials im elastisch verformbaren Bereich zu ermöglichen.

Bei praktischen Ausführungsformen können die Rippen, Stege und Ausnehmungen sowohl gleichmäßig über den gesamten Mantel der Lagerschale verteilt, aber auch nur auf einer Hälfte oder nur auf zwei einander gegenüberliegenden Abschnitten des Mantels der Lagerschale angeordnet sein. Bei gleichmäßiger Verteilung der Rippen, Stege und Ausnehmungen über den gesamten Mantel der Lagerschale besitzt das Kugelgelenk in allen radialen Richtungen die gleichen Federungseigenschaften.

Wenn aber die Rippen, Stege und Ausnehmungen nur auf einer Hälfte des Mantels der Lagerschale angeordnet sind, dann kann ein solches Kugelgelenk in einer Spurstange dazu benutzt werden, die unterschiedlichen Seitenkräfte bei Kurvenfahrt zu kompensieren und das Lenkverhalten des Fahrzeuges zu verbessern.

Wenn die Rippen, Stege und Ausnehmungen nur auf zwei einander gegenüberliegenden Abschnitten des Mantels der Lagerschale angeordnet sind, dann kann ein solches Kugelgelenk als Radgelenk verwendet werden, bei dem es erwünscht ist, daß das Kippmoment des Kugelzapfens auf einer Achse größer ist als auf einer im rechten Winkel dazu verlaufenden Achse.

Weitere Einzelheiten und Vorteile des Gegenstandes der Erfindung ergeben sich aus der nachfolgenden Beschreibung der zugehörigen Zeichnungen, in denen bevorzugte Ausführungsformen eines erfindungsgemäß ausgebildeten Kugelgelenkes schematisch dargestellt worden sind. In den Zeichnungen zeigen :

Figur 1  ein Kugelgelenk im montierten Zustand und im Längsschnitt ;

Figur 2  dasselbe Kugelgelenk als Sprengbild ;

Figur 3  eine Lagerschale mit gleichmäßig über den gesamten Mantel verteilt angeordneten Erhebungen in Draufsicht ;

Figur 4  dieselbe Lagerschale entlang der Linie IV-IV in Fig. 3 geschnitten ;

Figur 5  dieselbe Lagerschale in Seitenansicht ;

Figur 6  dieselbe Lagerschale in perspektivischer Darstellung ;

Figur 7 eine vergrößerte Darstellung der Überlappung zwischen Gelenkgehäuse und größeren Erhebungen der Lagerschale im Horizontalschnitt ;

Figur 8 eine Lagerschale mit oberhalb und unterhalb der Äquatorebene gegeneinander versetzt angeordneten Erhebungen in Draufsicht ;

Figur 9 dieselbe Lagerschale entlang der Linie IX-IX in Fig. 8 geschnitten ;

Figur 10 einen Abschnitt einer Abwicklung des Mantels derselben Lagerschale in Seitenansicht ;

Figur 11 eine Lagerschale mit nur auf einer Hälfte des Mantels angeordneten Erhebungen in Draufsicht ;

Figur 12 dieselbe Lagerschale entlang der Linie XII-XII in Fig. 11 geschnitten ;

Figur 13 dieselbe Lagerschale in Seitenansicht ;

Figur 14 eine Lagerschale mit auf gegenüberliegenden Seiten des Mantels angeordneten Erhebungen in Draufsicht ;

Figur 15 dieselbe Lagerschale entlang der Linie XV-XV in Fig. 14 geschnitten ;

Figur 16 dieselbe Lagerschale in Seitenansicht ;

Figur 17 eine vergrößerte Darstellung der verformten Erhebungen im montierten Zustand im Horizontalschnitt.

In einem Gelenkgehäuse 1 ist ein Kugelzapfen 2 mit einem Kugelkopf 3 unter Zwischenlage einer Lagerschale 4 aus elastischem Material angeordnet. An seiner Oberseite ist das Kugelgelenk mit einer eingewalzten Kappe 5 verschlossen, unter der ein Fettreservoir 6 liegt. Die Lagerschale 4 kann aus einem weichelastischen Kunststoff, beispielsweise Polyurethan (PUR), aber je nach Anwendungsfall auch aus einem hartelastischen Kunststoff, beispielsweise Polyoxymethylen (POM) bestehen.

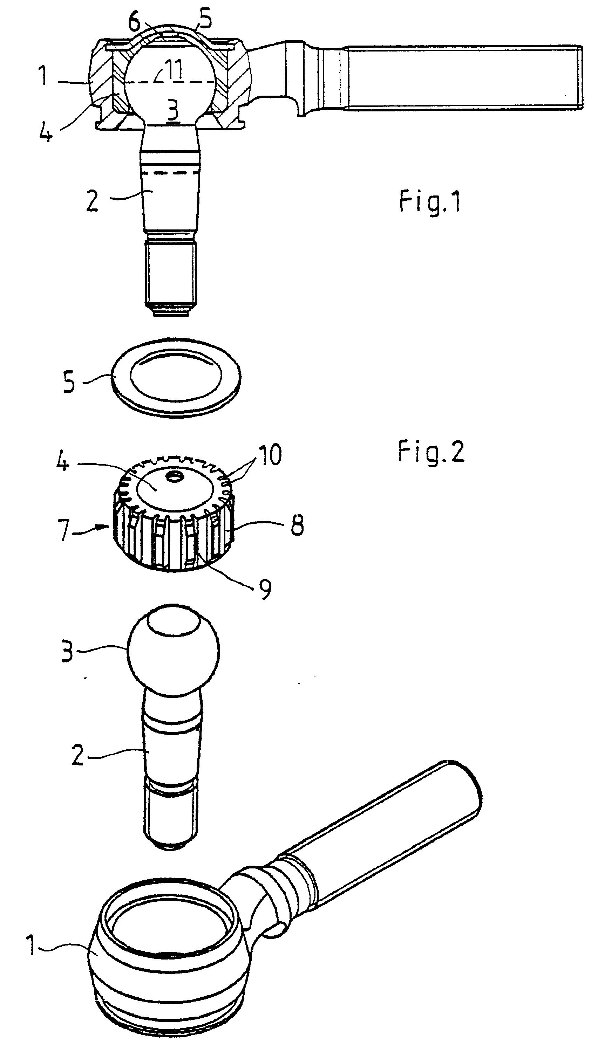

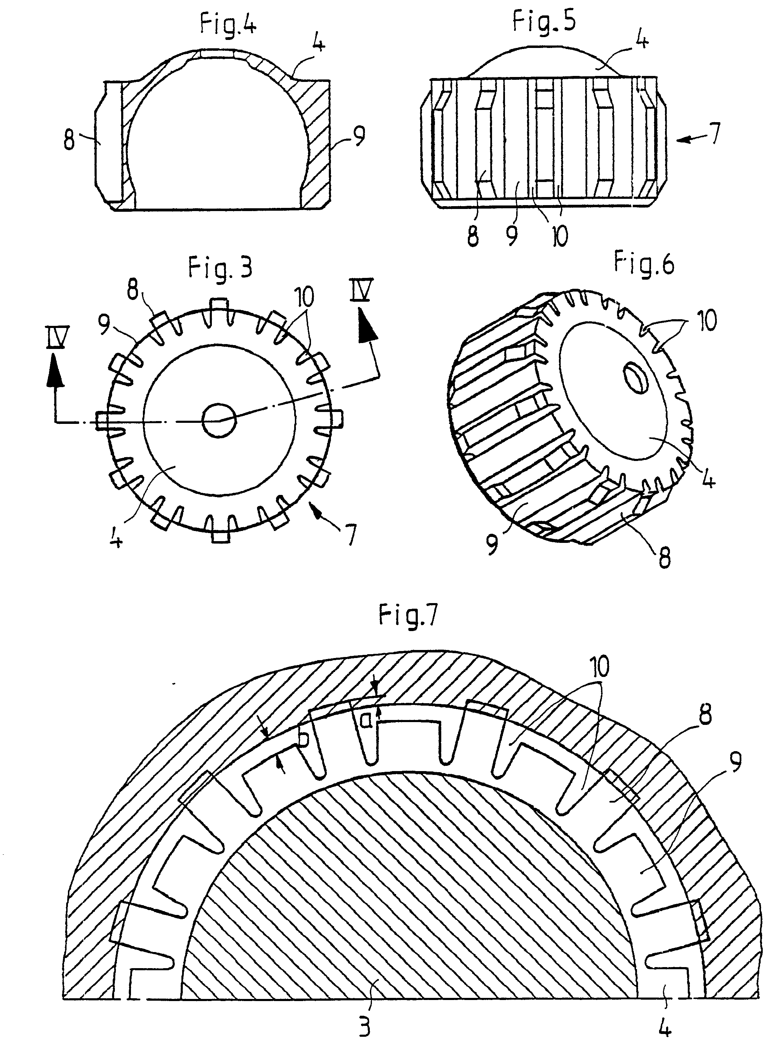

In dem Ausführungsbeispiel gemäß den Fig. 1 bis 7 besitzt die Lagerschale 4 gleichmäßig über ihren gesamten Mantel 7 verteilt angeordnete höhere Rippen 8 und niedrige Stege 9, die durch Ausnehmungen 10 voneinander getrennt sind.

Bei der Montage des Kugelgelenkes, wie sie im Sprengbild der Fig. 2 dargestellt worden ist, kommen zunächst nur die Rippen 8 mit dem Gelenkgehäuse 1 in Kontakt, weil sie im nicht vorgespannten Zustand ein Übermaß a im Verhältnis zur Innenkontur des Gelenkgehäuses 1 besitzen. Beim Einpressen in das Gelenkgehäuse 1 werden die Rippen 8 elastisch verformt und vorgespannt. Dabei wird das überschüssige Material der Rippen 8 in die Ausnehmungen 10 hinein verquetscht. Erst wenn im Fahrbetrieb starke Stöße auftreten, welche die Rippen 8 weiter elastisch verformen, kommen die Stege 9 zum Tragen, weil sie gegenüber der Innenkontur des Gelenkgehäuses 1 ein Untermaß b besitzen. Dadurch kann im Fahrbetrieb ohne plastische Verformung der Rippen 8 bei gleichzeitig ansteigender Federkraft ein verlängerter Federweg ausgenutzt werden, um die Stoßbelastungen mit der größeren Fläche der kürzeren Stege 9 aufzufangen. Bei Verwendung einer nach dieser technischen Lehre ausgebildeten Lagerschale 4 ist es nicht mehr erforderlich, das in der Regel geschmiedete Gelenkgehäuse 1 innen spanabhebend zu bearbeiten.

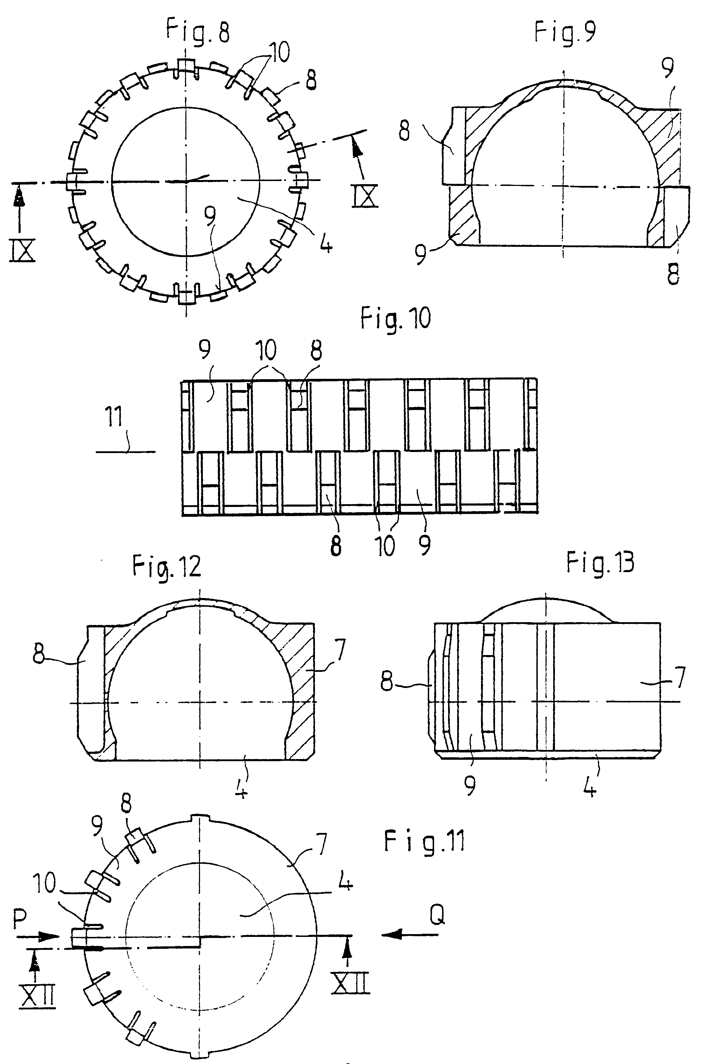

In dem Ausführungsbeispiel gemäß Fig. 8 bis 10 sind die Rippen 8, Stege 9 und Ausnehmungen 10 oberhalb und unterhalb einer Äquatorebene 11 des Kugelkopfes 3 gegeneinander versetzt angeordnet, um eine unterschiedliche Feder-Charakteristik, die durch unterschiedliche Winkellagen zwischen dem Gelenkgehäuse 1 und der Lagerschale 4 zur Belastungsrichtung bei der Montage auftreten können, zu eliminieren.

Bei dem Ausführungsbeispiel gemäß den Fig. 11 bis 13 sind die Rippen 8, Stege 9 und Ausnehmungen 10 nur auf einer Hälfte des Mantels 7 der Lagerschale 4 angeordnet. Dadurch besitzt das Kugelgelenk in der Belastungsrichtung P eine größere Elastizität als in der entgegengesetzten Belastungsrichtung Q. Kugelgelenke mit dieser Lagerschale 4 werden vorzugsweise in Spurstangen zum Ausgleich unterschiedlicher Seitenführungskräfte bei Kurvenfahrt eingesetzt.

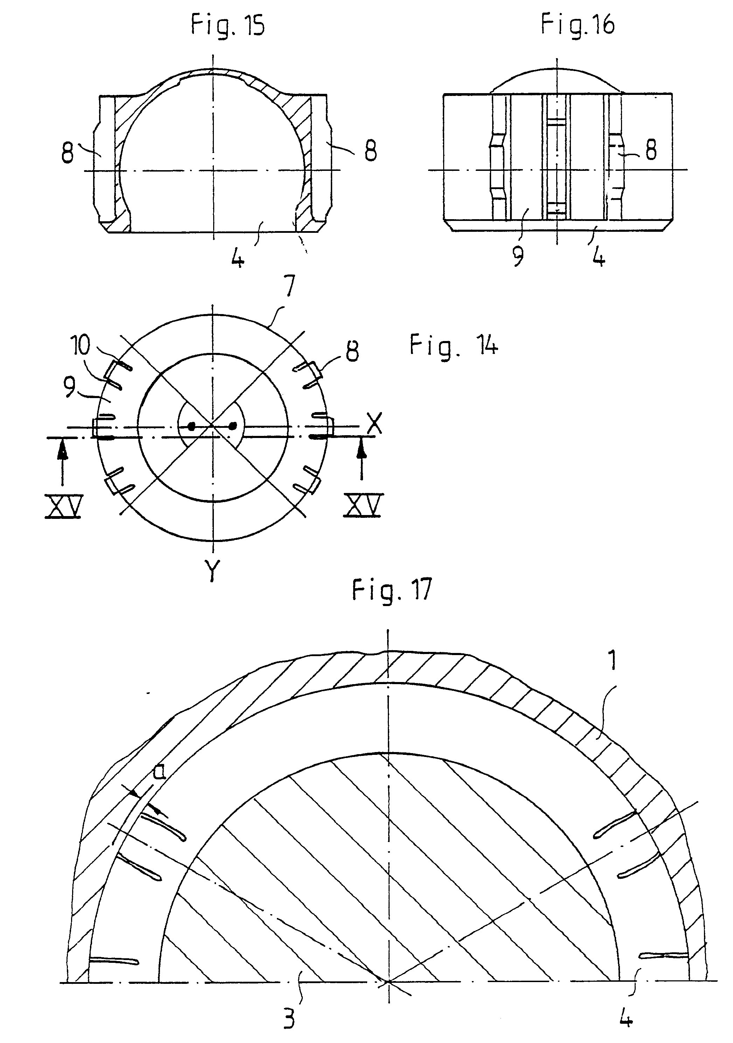

Bei dem Ausführungsbeispiel gemäß den Fig. 14 bis 17 sind die Rippen 8, Stege 9 und Ausnehmungen 10 nur auf diametral gegenüberliegenden Abschnitten des Mantels 7 der Lagerschale 4 angeordnet, die etwa einen Winkel von 90° einschließen. Kugelgelenke mit dieser Lagerschale besitzen in Richtung der Achse x ein größeres Kippmoment als in Richtung der Achse y. Deshalb sind diese Kugelgelenke als Radgelenke besonders geeignet.

## Patentansprüche

1. Kugelgelenk mit einem in einer Lagerschale (4) aus elastischem Material gehaltenen Kugelkopf (3), wobei die auf den Kugelkopf (3) einen Radialdruck ausübende Lagerschale (4) in ein im wesentlichen topfartig ausgebildetes Gelenkgehäuse (1) eingesetzt ist und auf ihrer Außenfläche mit an der Innenwand des Gelenkgehäuses anliegenden, elastisch verformbaren Erhebungen versehen ist, dadurch gekennzeichnet, daß die Erhebungen an dem Mantel (7) der Lagerschale (4) als sich in axialer Richtung erstreckende Rippen (8) angeordnet sind und daß auf dem Mantelumfang parallel zwischen den Rippen (8) von diesen durch axial verlaufende, nutenförmige Ausnehmungen (10) getrennte Stege (9) verlaufen, wobei die in Umfangsrichtung gemessene Stegbreite größer ist als die Breite der Rippen (8) und die radiale Erstreckung der Rippen (8) größer ist als die der Stege (9), so daß die Lagerschale (4) nur bei größer auf das Gelenk einwirkender Belastung auch über die Stege (9) an dem Gelenkgehäuse (1) abgestützt wird.

2. Kugelgelenk nach Anspruch 1, dadurch gekennzeichnet, daß die Rippen (8), Stege (9) und Ausnehmungen (10) gleichmäßig über den gesamten Mantel (7) der Lagerschalen (4) verteilt angeordnet sind.

3. Kugelgelenk nach den Ansprüchen 1 und 2, dadurch gekennzeichnet, daß die Rippen (8), Stege (9) und Ausnehmungen (10) oderhalb und unterhalb der Äquatorebene (11) des Kugelkopfes (3) gegeneinander versetzt angeordnet sind.

4. Kugelgelenk nach Anspruch 1, dadurch gekennzeichnet, daß die Rippen (8), Stege (9) und Ausnehmungen (10) nur auf einer Hälfte des Mantels (7) der Lagerschale (4) angeordnet sind.

5. Kugelgelenk nach Anspruch 1, dadurch gekennzeichnet, daß die Rippen (8), Stege (9) und Ausnehmungen (10) nur auf zwei einander gegenüberliegenden Abschnitten des Mantels (7) der Lagerschale (4) angeordnet sind.

## Claims

1. A ball-and-socket joint with a ball head (3) held in a bearing shell (4) of elastic material, wherein the bearing shell (4) exerting a radial pressure on the ball head (3) is mounted in a substantially cup-shaped constructed joint housing (1) and is provided on its outer surface with elastically deformable raised portions acting on the inner wall of the joint housing, characterised in that, the raised portions on the outside (7) of the bearing shell (4) are disposed as ribs (8) extending in the axial direction, and in that ridges (9) extend on the outside surface parallel between the ribs (8) and separated from them by axially-extending groove-shaped recesses (10), wherein the ridge width measured in the circumferential direction is greater than the width of the ribs (8) and the radial extension of the ribs (8) is greater than that of the ridges (9), so that the bearing shell (4) is also supported by the ridges (9) on the joint housing only when a higher load is acting on the joint.

2. A ball-and-socket joint according to claim 1, characterised in that the ribs (8), ridges (9) and recesses (10) are arranged evenly distributed over the entire outside (7) of the bearing shell (4).

3. A ball-and-socket joint according to claims 1 and 2, characterised in that the ribs (8), ridges (9) and recesses (10) are disposed staggered relative to one another half above and half below the equatorial plane (11) of the ball head (3).

4. A ball-and-socket joint according to claim 1, characterised in that the ribs (8), ridges (9) and recesses (10) are disposed only on one half of the outside (7) of the bearing shell (4).

5. A ball-and-socket joint according to claim 1, characterised in that the ribs (8), ridges (9) and recesses (10) are disposed only on two oppositely-facing sections of the outside (7) of the bearing shell (4).

## Revendications

1. Articulation à rotule avec une tête de rotule (3) maintenue dans un coussinet (4) en matière élastique, le coussinet (4) qui exerce une pression radiale sur la tête de rotule (3) étant inséré dans un carter d'articulation (1) constitué sensiblement en forme de pot et étant muni sur sa surface extérieure de bosses déformables élastiquement et s'appliquant sur la paroi intérieure du carter d'articulation, caractérisée en ce que les bosses de la surface extérieure (7) du coussinet (4) sont disposées sous forme de côtes s'étendant en direction axiale et en ce que des barrettes (9) s'étendent sur la périphérie de la surface extérieure parallèlement entre les côtes (8) en étant séparées de celles-ci par des évidements (10) en forme d'encoches s'étendant en direction axiale, la largeur des barrettes mesurée en direction périphérique étant plus grande que la largeur des côtes (8) et l'étendue radiale des côtes (8) étant plus grande que celle des barrettes (9) de sorte que le coussinet (4) ne s'appuie sur le carter d'articulation (1) aussi par l'intermédiaire des barrettes (9), que pour une charge élevée agissant sur l'articulation.

2. Articulation à rotule selon la revendication 1, caractérisée en ce que les côtes (8), les barrettes (9) et les évidements (10) sont uniformément répartis sur l'ensemble de la surface latérale (7) du coussinet (4).

3. Articulation à rotule selon les revendications 1 et 2, caractérisée en ce que les côtes (8), les barrettes (9) et les évidements (10) sont disposés au-dessus et au-dessous du plan (11) de l'équateur de la tête de rotule (3), en étant décalés les uns par rapport aux autres.

4. Articulation à rotule selon la revendication 1, caractérisée en ce que les côtes (8), les barrettes (9) et les évidements (10) ne sont disposés que sur une moitié de la surface latérale (7) du coussinet (4).

5. Articulation à rotule selon la revendication 1, caractérisée en ce que les côtes (8), les barrettes (9) et les évidements (10) ne sont disposés que sur deux parties opposées l'une à l'autre de la surface latérale (7) du coussinet (4).

Fig.1

Fig.2

0 145 869

Fig.4

Fig.5

Fig.3

Fig.6

Fig.7

2

Fig. 8

Fig. 9

Fig. 10

Fig. 12

Fig. 13

F i g. 11

3

Fig. 15

8

8

4

Fig.16

8

9    4

Fig. 14

7

10

9

8

X

XV    XV

Y

Fig. 17

1

a

3    4